# EUROPÄISCHE PATENTSCHRIFT

(11) **EP 4 399 194 B1**
(45) Veröffentlichungstag und Bekanntmachung des Hinweises auf die Patenterteilung: **23.07.2025**
(21) Anmeldenummer: 22790234.3
(22) Anmeldetag: 08.09.2022
(51) Int. Cl.: C05G 5/12, C05G 5/30, C05C 9/00

(54) **PLA-BESCHICHTUNG VON DÜNGEMITTELN**
PLA COATING OF FERTILISERS
ENROBAGE DE PLA POUR ENGRAIS

(30) Priorität: 10.09.2021 DE 102021210002; 10.09.2021 BE 202105705
(43) Veröffentlichungstag der Anmeldung: 17.07.2024
(73) Patentinhaber: thyssenkrupp Uhde GmbH, 44141 Dortmund (DE); thyssenkrupp AG, 45143 Essen (DE)
(72) Erfinder: MAKHYNYA, Yevgeny, 45481 Mülheim an der Ruhr (DE)
(74) Vertreter: thyssenkrupp Intellectual Property GmbH
(86) Internationale Anmeldenummer: PCT/EP2022/075033
(87) Internationale Veröffentlichungsnummer: WO 2023/036893

(56) Entgegenhaltungen:
- EP-A1- 0 587 069
- EP-A1- 2 876 124
- WO-A1-00/66515
- WO-A1-2015/071447
- CN-B- 105 411 996
- JP-A- 2001 064 090
- JP-A- H07 309 689
- JP-A- H1 192 304
- JP-A- H11 263 689

## Beschreibung

Die Erfindung betrifft ein partikuläres Düngemittel mit einer PLA-Beschichtung, der Verwendung einer geeigneten PLA-Masse, einer Lösung mit PLA zur Beschichtung, der Verwendung einer entsprechenden Lösung sowie eines Verfahrens zur Beschichtung partikulärer Düngemittel.

Die Patentschrift EP 1 890 985 B1 beschreibt ein beschichtetes Düngemittel mit kontrollierter Wirkstofffreisetzung. Die Offenlegungsschrift DE 196 03 739 A1 beschreibt Mischungen aus Düngemittelgranulaten. Die Offenlegungsschrift EP 0 763 510 A1 beschreibt eine mittels Wirbelschicht-Granulation aufgesprühte Polymer-Schicht. Die Patentschrift US 9,266,787 B2 beschreibt Düngemittel mit einer Polymer-Schicht mit spezifischer Dicke.

Aus der WO 2006 133 893 A2 ist ein beschichtetes Düngemittel mit kontrollierter Wirkstofffreisetzung bekannt.

Aus der JP 07309689 A ist ein PLA aufweisendes Düngemittel bekannt.

Aus der JP 11092304 A ist ein Sprühverfahren für ein biologisch abbaubares Polymer bekannt.

Aus der JP 07033577 A ist ein PLA beschichtetes Düngemittel bekannt.

Aus der DE 10 2017 217 498 A1 ist ein Verfahren zur Herstellung PLA-beschichteter partikulärer Düngemittel bekannt.

JP2001064090A offenbart ein partikuläres Düngemittel, welches mit einer Polymilchsäuremasse beschichtet ist. Das molare Verhältnis von L-Milchsäure-Monomereinheiten zu D-Milchsäure-Monomereinheiten im besagten Polymer beträgt 3-6 (entspricht einem Anteil an L-Milchsäure-Monomereinheiten von etwa 75-86 mol%).

CN105411996B offenbart die Herstellung eines Polymilchsäure-basierten Materials zur kontrollierten Freisetzung von Medikamenten. Das Verfahren umfasst einen Schritt, in dem Poly-L-milchsäure in Aceton gelöst wird, um eine 15%ige Lösung zu erhalten.

Es hat sich jedoch gezeigt, dass handelsübliche PLA-Massen nur eine begrenzte Löslichkeit in geeigneten Lösemitteln aufweisen. Zwar weist PLA in vielen chlorierten Lösemitteln gute Löslichkeit auf, chlorierte Lösemittel sind jedoch für die Beschichtungen aus ökologischen Gesichtspunkten nicht geeignet. Daher ist eine qualitativ gute Beschichtung sowie eine einfache und schnelle Herstellung der Beschichtung schwierig.

Aufgabe der Erfindung ist es, ein PLA zu finden, welches einfacher eine qualitativ gute Beschichtung ermöglicht.

Gelöst wird diese Aufgabe durch ein partikuläres Düngemittel mit den in Anspruch 1 angegebenen Merkmalen, durch eine Verwendung von Polymilchsäuremasse mit den in Anspruch 7 angegebenen Merkmalen, durch eine Lösung mit den in Anspruch 10 angegebenen Merkmalen, durch eine Verwendung der Lösung mit den in Anspruch 14 angegebenen Merkmalen sowie durch ein Verfahren zur Beschichtung mit den in Anspruch 15 angegebenen Merkmalen. Vorteilhafte Weiterbildungen ergeben sich aus den Unteransprüchen und der nachfolgenden Beschreibung.

Das erfindungsgemäße partikuläre Düngemittel weist eine Beschichtung auf, wobei die Beschichtung Polymilchsäuremasse enthält. Erfindungswesentlich weist die Polymilchsäuremasse einen Anteil von 70 % bis 99 %, bevorzugt von 90 % bis 99 %, L-Milchsäure-Monomereinheiten und 1 % bis 30 %, bevorzugt von 1 % bis 10 %, D-Milchsäure-Monomereinheiten auf (also weist die Polymilchsäuremasse einen Anteil von 70 % bis 99 % L-Milchsäure-Monomereinheiten und einen Anteil von 1 % bis 30 % D-Milchsäure-Monomereinheiten auf, bevorzugt einen Anteil von 90 % bis 99 % L-Milchsäure-Monomereinheiten und einen Anteil von 1 % bis 10 % D-Milchsäure-Monomereinheiten).

Die Anteile der jeweiligen Milchsäure-Monomereinheiten sind insbesondere als Stoffmengenanteile angegeben, bezogen auf die Gesamtmenge an Monomereinheiten in der Polymilchsäuremasse oder in der jeweiligen Polymilchsäure (entsprechend "Mol-%"; aufgrund der identischen Molekulargewichte der beiden unterschiedlichen Milchsäure-Monomereinheiten ist diese Angabe im vorliegenden Fall identisch mit dem Massenanteil in Gew.-%). Mit Ausnahme unvermeidbarer Verunreinigungen ergänzen sich die Stoffmengenanteile der L-Milchsäure-Monomereinheiten und die Stoffmengenanteile der D-Milchsäure-Monomereinheiten insbesondere zu jeweils 100 %.

Eine Polymilchsäuremasse im Sinne der Erfindung weist wenigstens eine erste Polymilchsäure auf und ist eine Mischung (Blend) aus zwei verschiedenen Polymilchsäuren, kann aber auch eine Mischung aus mehr verschiedenen Polymilchsäuren sein. Daneben können in der Polymilchsäuremasse Dimere oder Oligomere der Milchsäure enthalten sein, vorzugsweise mit weniger als 5 Gew.-%, da diese ebenfalls aus Milchsäure-Monomereinheiten bestehen, können insbesondere diese ebenfalls zum Stoffmengenanteil der jeweiligen Milchsäure-Monomereinheiten in der Polymilchsäuremasse beitragen. Zusätzlich kann die Polymilchsäure bis zu 5 Gew.-% andere Komponenten enthalten, beispielsweise Farbstoffe zu Einfärbung des Produkts. Diese anderen Komponenten tragen insbesondere nicht zum Massenanteil und nicht zum Stoffmengenanteil der jeweiligen Milchsäure-Monomereinheiten bei.

Polymilchsäure (Polylactide, polylactic acid, PLA) werden oftmals über ringöffnende Polyaddition von Lactid, einem ringförmigen Ester aus zwei Milchsäure-Monomereinheiten, hergestellt. Da Milchsäure ein stereogenes Zentrum aufweist gibt es drei mögliche Lactide. Das erste besteht aus zwei L-Milchsäure-Monomereinheiten und wird entsprechend L-Lactid genannt. Ein zweites besteht aus zwei D-Milchsäure-Monomereinheiten und wird entsprechend D-Lactid genannt. Ein drittes besteht aus einer L-Milchsäure-Monomereinheit und einer D-Milchsäure-Monomereinheit und wird als meso-Lactid bezeichnet. Vor der ringöffnenden Polyaddition werden die Lactide getrennt, wobei für die meisten Anwendungen reines L-Lactid verwendet wird. Das entstehende Polymer, auch PLLA genannt, weist eine vergleichsweise hohe Kristallinität auf und einen Schmelzpunkt von bis über 175 °C. Steigt der Anteil an D-Milchsäure-Monomereinheiten in der Polymilchsäure, so ist ab einem Anteil von etwa 6 % an D-Milchsäure-Monomereinheiten das erhaltene Polymer amorph und weist einen geringeren Schmelzpunkt auf, welcher unter 130 °C liegen kann.

Reines PLLA weist eine extrem hohe Kristallinität auf und einen hohen Schmelzpunkt. Mit steigendem Anteil an D-Milchsäure-Monomereinheiten nehmen Kristallinität und Schmelzpunkt ab. Es hat sich herausgestellt, dass bei einem entsprechenden Anteil an D-Milchsäure-Monomereinheiten die Eignung für die Beschichtung von partikulären Düngemitteln besonders gut ist.

In einer Ausführungsform der Erfindung weist die Polymilchsäuremasse einen Anteil von 95 % bis 98 % L-Milchsäure-Monomereinheiten und einen Anteil von 2 % bis 5 % D-Milchsäure-Monomereinheiten auf.

Die Polymilchsäuremasse weist erfindungsgemäß wenigstens eine erste Polymilchsäure und wenigstens eine zweite Polymilchsäure auf. Erfindungsgemäß weist dabei die erste Polymilchsäure einen Anteil von 50 % bis 67 % L-Milchsäure-Monomereinheiten und einen Anteil von 33 % bis 50 % D-Milchsäure-Monomereinheiten auf. Infolge der statistischen Natur der Polymerisation unterliegen insbesondere die jeweiligen Anteile an Monomeren in den einzelnen Polymermolekülen einer gewissen Schwankungsbreite und stellen daher lediglich Mittelwerte dar.

Verwendet man meso-Lactid zur ringöffnenden Polyaddition, so erhält man im Idealfall ein ataktisches Polymer mit 50 % L-Milchsäure-Monomereinheiten und 50 % D-Milchsäure-Monomereinheiten, da die Ringöffnung üblicherweise nicht stereoselektiv erfolgt. Die erhaltene Polymilchsäure wird auch m-PLA oder PDLLA genannt. Für die meisten Anwendungen erfolgt jedoch keine vollständige Aufreinigung des meso-Lactids, sodass sich bei einem üblicherweise vorhandenen Überschuss der natürlichen L-Milchsäure-Monomereinheit ein Verhältnis von 2:1 bis 1:1 für L:D ergibt. Auch wenn einige Eigenschaften des PDLLA sich als für viele Anwendungen ungünstiger herausgestellt haben, so hat sich jedoch gerade für die Beschichtung von Düngemittel gezeigt, dass PDLLA wenigstens zwei positive Eigenschaften aufweist. Zum einen ist die Löslichkeit in geeigneten (nicht umweltschädlichen) Lösemitteln, beispielsweise Aceton (Propanon) deutlich höher, zum anderen ist auch die biologische Abbaubarkeit erleichtert beziehungsweise beschleunigt. Die erste Eigenschaft erleichtert die Beschichtung, die zweite Eigenschaft erleichtert die Freisetzung des Düngemittels auf dem Feld und den anschließenden schnellen, vollständigen und rückstandsfreien Abbau. Dadurch wurde festgestellt, dass gerade Beschichtungen, welche wenigstens eine erste Polymilchsäure aufweisen, wobei die erste Polymilchsäure einen Anteil von 50 % bis 67 % L-Milchsäure-Monomereinheiten und einen Anteil von 33 % bis 50 % D-Milchsäure-Monomereinheiten auf, für die Beschichtung von partikulären Düngemitteln überraschend gut geeignet sind. Reines PDLLA ist für eine Beschichtung weniger geeignet, da bei den üblichen Verarbeitungstemperaturen bereits zu einer Erweichung kommt. Damit kann es dann bei dem Beschichtungsprozess zu Verklebungen kommen. Damit ist die Verarbeitbarkeit von reinem PDLLA nicht optimal, auch wenn die Löslichkeit für die Beschichtung vorteilhaft wäre.

Erfindungsgemäß weist dabei die zweite Polymilchsäure einen Anteil von 95 % bis 100 % L-Milchsäure-Monomereinheiten und einen Anteil von 0 % bis 5 % D-Milchsäure-Monomereinheiten auf. Die zweite Polymilchsäure ist somit bevorzugt PLLA und damit kristallin. Infolge der statistischen Natur der Polymerisation unterliegen insbesondere die jeweiligen Anteile an Monomeren in den unterschiedlichen Polymermolekülen einer gewissen Schwankungsbreite und stellen daher lediglich Mittelwerte dar.

Wie bereits ausgeführt, kann die Polymilchsäuremasse auch mehr als zwei Polymilchsäuren aufweisen, beispielsweise eine weitere erste Polymilchsäure, eine weitere zweite Polymilchsäure, eine dritte Polymilchsäure, eine vierte Polymilchsäure und dergleichen. Eine weitere erste Polymilchsäure ist insbesondere eine Polymilchsäure, die wie die wenigstens eine erste Polymilchsäure eine Zusammensetzung aus dem Bereich der ersten Polymilchsäure aufweist, so dass diese eine Polymilchsäure ist, die wie die wenigstens eine erste Polymilchsäure ebenfalls einen Anteil von 50 % bis 67 % L-Milchsäure-Monomereinheiten und einen Anteil von 33 % bis 50 % D-Milchsäure-Monomereinheiten aufweist, deren Zusammensetzung aber von der Zusammensetzung der zumindest einen ersten Polymilchsäure abweicht. Eine weitere zweite Polymilchsäure ist insbesondere eine Polymilchsäure, die wie die wenigstens eine zweite Polymilchsäure eine Zusammensetzung aus dem Bereich der zweiten Polymilchsäure aufweist, nämlich einen Anteil von 95 % bis 100 % L-Milchsäure-Monomereinheiten und einen Anteil von 0 % bis 5 % D-Milchsäure-Monomereinheiten, deren Zusammensetzung aber von der Zusammensetzung der zumindest einen zweiten Polymilchsäure abweicht. Die dritte Polymilchsäure, die vierte Polymilchsäure und gegebenenfalls jede weitere Polymilchsäure ist insbesondere eine Polymilchsäure, die weder eine Zusammensetzung aus dem Bereich der ersten Polymilchsäure noch eine Zusammensetzung aus dem Bereich der zweiten Polymilchsäure aufweist. Beispielsweise weisen die dritte Polymilchsäure, die vierte Polymilchsäure und etwaige weitere Polymilchsäuren jeweils eine Masse von maximal 10 % der Gesamtmasse der Polymilchsäuremasse auf (entsprechend 10 Gew.-%). Insbesondere addieren sich der Masseanteil der ersten Polymilchsäure und der Masseanteil der zweiten Polymilchsäure sowie die Masseanteile etwaiger weiterer Polymilchsäuren - von unvermeidbaren Verunreinigungen abgesehen - jeweils zu 100 % der Gesamtmasse der Polymilchsäuremasse (entsprechend 100 Gew.-%). Die jeweiligen Polymilchsäuren können dabei auch Copolymere von Polymilchsäuren sein.

**In** einer weiteren Ausführungsform der Erfindung weist die Beschichtung einen Anteil der ersten Polymilchsäure von 0,1 Gew.-% bis 50 Gew.-% und einen Anteil der zweiten Polymilchsäure von 50 Gew.-% bis 99,9 Gew.-% auf.

**In** einer weiteren Ausführungsform der Erfindung weist die Beschichtung einen Anteil der ersten Polymilchsäure von 5 Gew.-% bis 50 Gew.-%, bevorzugt 7,5 Gew.-% bis 25 Gew.-%, besonders bevorzugt von 10 Gew.-% bis 20 Gew.-% und einen Anteil der zweiten Polymilchsäure von 50 Gew.-% bis 95 Gew.-%, bevorzugt 75 Gew.-% bis 92,5 Gew.-%, besonders bevorzugt von 80 Gew.-% bis 90 Gew.-%, auf. Dies beinhaltet vor allem auch eine Beschichtung, die einen Anteil der ersten Polymilchsäure von 5 Gew.-% bis 50 Gew.-% und einen Anteil der zweiten Polymilchsäure von 50 Gew.-% bis 95 Gew.-% aufweist, bevorzugt eine Beschichtung, die einen Anteil der ersten Polymilchsäure von 7,5 Gew.-% bis 25 Gew.-% und einen Anteil der zweiten Polymilchsäure von 75 Gew.-% bis 92,5 Gew.-% aufweist, und besonders bevorzugt eine Beschichtung, die einen Anteil der ersten Polymilchsäure von 10 Gew.-% bis 20 Gew.-% und einen Anteil der zweiten Polymilchsäure von 80 Gew.-% bis 90 Gew.-% aufweist.

In dieser Ausführungsform ist somit der größte Anteil der Polymilchsäuremasse ein kristallines PLLA und nur eine gewisse Beimischung aus einem PDLLA. Auf diese Weise kann eine Beschichtung erhalten werden, die eine vergleichsweise ähnliche Eigenschaft hinsichtlich mechanischer Belastbarkeit und Freisetzungsdynamik aufweist wie eine reine PLLA-Beschichtung, aufgrund des Anteils an PDLLA jedoch eine höhere Löslichkeit und damit eine einfachere Herstellung ermöglichst.

In einer weiteren Ausführungsform der Erfindung weist das partikuläre Düngemittel einen Kern auf, wobei der Kern zu wenigstens 80 Gew.-% aus Harnstoff besteht. Harnstoff ist derzeit der wichtigste Stickstoffdünger.

In einer weiteren Ausführungsform der Erfindung weist das partikuläre Düngemittel einen Kern auf, wobei der Kern zu wenigstens 80 Gew.-% aus Kalkammonsalpeter (Calciumammoniumnitrat) besteht.

In einer weiteren Ausführungsform der Erfindung weist das partikuläre Düngemittel einen Kern auf, wobei der Kern zu wenigstens 80 Gew.-% aus PK besteht, einem komplexen Mischdünger, bestehend aus zwei Hauptnährstoffen für die Pflanzen (Phosphor in Form von Phosphaten, in der Regel mono- und di-Ammoniumphosphat und Kalium in Form von Kaliumsalzen) besteht.

In einer weiteren Ausführungsform der Erfindung weist das partikuläre Düngemittel einen Kern auf, wobei der Kern zu wenigstens 80 Gew.-% aus NPK besteht, einem komplexen Mischdünger, bestehend aus drei Hauptnährstoffen für die Pflanzen (Stickstoff in Form von Nitraten und/oder Harnstoff, Phosphor in Form von Phosphaten, in der Regel mono- und di-Ammoniumphosphat und Kalium in Form von Kaliumsalzen.

In einem weiteren Aspekt betrifft die Erfindung die Verwendung einer Polymilchsäuremasse zur Beschichtung von Düngemitteln. Erfindungsgemäß weist die Polymilchsäuremasse einen Anteil von 70 % bis 99 % L-Milchsäure-Monomereinheiten, bevorzugt einen Anteil von 90 % bis 99 % L-Milchsäure-Monomereinheiten und einen Anteil von 1 % bis 30 % D-Milchsäure-Monomereinheiten, bevorzugt einen Anteil von 1 % bis 10 %D-Milchsäure-Monomereinheiten, auf.

Für die Verwendung gilt das für die Beschichtung des partikulären Düngemittels Gesagte analog. Dieses gilt auch für die weiteren Ausführungsformen.

Erfindungsgemäß weist die Polymilchsäuremasse wenigstens eine erste Polymilchsäure auf, wobei die erste Polymilchsäure einen Anteil von 50 % bis 67 % L-Milchsäure-Monomereinheiten und einen Anteil von 33 % bis 50 % D-Milchsäure-Monomereinheiten aufweist. Zusätzlich weist die Polymilchsäuremasse weiter auch wenigstens eine zweite Polymilchsäure auf, wobei die zweite Polymilchsäure einen Anteil von 95 % bis 100 % L-Milchsäure-Monomereinheiten und einen Anteil von 0 % bis 5 % D-Milchsäure-Monomereinheiten aufweist.

In einer weiteren Ausführungsform der Erfindung weist die Polymilchsäuremasse einen Anteil der ersten Polymilchsäure von 5 Gew.-% bis 50 Gew.-%, bevorzugt einen Anteil von 7,5 Gew.-% bis 25 Gew.-%, besonders bevorzugt einen Anteil von 10 Gew.-% bis 20 Gew.-%, und einen Anteil der zweiten Polymilchsäure von 50 Gew.-% bis 95 Gew.-%, bevorzugt einen Anteil von 75 Gew.-% bis 92,5 Gew.-%, besonders bevorzugt einen Anteil von 80 Gew.-% bis 90 Gew.-%, auf. Dies beinhaltet vor allem auch eine Polymilchsäuremasse, die einen Anteil der ersten Polymilchsäure von 5 Gew.-% bis 50 Gew.-% und einen Anteil der zweiten Polymilchsäure von 50 Gew.-% bis 95 Gew.-% aufweist, bevorzugt eine Polymilchsäuremasse, die einen Anteil der ersten Polymilchsäure von 7,5 Gew.-% bis 25 Gew.-% und einen Anteil der zweiten Polymilchsäure von 75 Gew.-% bis 92,5 Gew.-% aufweist, besonders bevorzugt eine Polymilchsäuremasse, die einen Anteil der ersten Polymilchsäure von 10 Gew.-% bis 20 Gew.-% und einen Anteil der zweiten Polymilchsäure von 80 Gew.-% bis 90 Gew.-% aufweist.

In einem weiteren Aspekt betrifft die Erfindung eine Lösung zur Beschichtung von partikulären Düngemitteln, wobei die Lösung als Lösemittel Aceton oder ein Lösemittelgemisch mit wenigstens 90 Gew.-% Aceton aufweist.

Erfindungsgemäß sind in dem Lösemittel 1 Gew.-% bis 25 Gew.-%, bevorzugt 4 Gew.-% bis 17 Gew.-%, einer Polymilchsäuremasse gelöst. Die Polymilchsäuremasse weist einen Anteil von 70 % bis 99 % L-Milchsäure-Monomereinheiten, bevorzugt einen Anteil von 90 % bis 99 % L-Milchsäure-Monomereinheiten, und einen Anteil von 1 % bis 30 % D-Milchsäure-Monomereinheiten, bevorzugt einen Anteil von 1% bis 10 % D-Milchsäure-Monomereinheiten, auf.

Für die Lösung gilt das für die Beschichtung des partikulären Düngemittels Gesagte analog. Dieses gilt auch für die weiteren Ausführungsformen.

In einer weiteren Ausführungsform der Erfindung wenigstens eine erste Polymilchsäure auf, wobei die erste Polymilchsäure einen Anteil von 50 % bis 67 % L-Milchsäure-Monomereinheiten und 33 % bis 50 % D-Milchsäure-Monomereinheiten aufweist.

In einer weiteren Ausführungsform der Erfindung weist die Polymilchsäuremasse wenigstens eine zweite Polymilchsäure auf, wobei die zweite Polymilchsäure einen Anteil von 95 % bis 100 % L-Milchsäure-Monomereinheiten und 0 % bis 5 % D-Milchsäure-Monomereinheiten aufweist.

Erfindungsgemäß weist die in der Lösung gelöste Polymilchsäuremasse wenigstens eine erste Polymilchsäure auf, wobei die erste Polymilchsäure einen Anteil von 50 % bis 67 % L-Milchsäure-Monomereinheiten und einen Anteil von 33 % bis 50 % D-Milchsäure-Monomereinheiten aufweist. Zusätzlich weist die Polymilchsäuremasse wenigstens eine zweite Polymilchsäure auf, wobei die zweite Polymilchsäure einen Anteil von 95 % bis 100 % L-Milchsäure-Monomereinheiten und einen Anteil von 0 % bis 5 % D-Milchsäure-Monomereinheiten aufweist.

In einer weiteren Ausführungsform der Erfindung weist die Polymilchsäuremasse einen Anteil der ersten Polymilchsäure von 5 Gew.-% bis 50 Gew.-%, bevorzugt einen Anteil von 7,5 Gew.-% bis 25 Gew.-%, besonders bevorzugt einen Anteil von 10 Gew.-% bis 20 Gew.-%, und einen Anteil der zweiten Polymilchsäure von 50 Gew.-% bis 95 Gew.-%, bevorzugt einen Anteil von 75 Gew.-% bis 92,5 Gew.-%, besonders bevorzugt einen Anteil von 80 Gew.-% bis 90 Gew.-%, auf. Dies beinhaltet vor allem auch eine Polymilchsäuremasse, die einen Anteil der ersten Polymilchsäure von 5 Gew.-% bis 50 Gew.-% und einen Anteil der zweiten Polymilchsäure von 50 Gew.-% bis 95 Gew.-% aufweist, bevorzugt eine Polymilchsäuremasse, die einen Anteil der ersten Polymilchsäure von 7,5 Gew.-% bis 25 Gew.-% und einen Anteil der zweiten Polymilchsäure von 75 Gew.-% bis 92,5 Gew.-% aufweist, besonders bevorzugt eine Polymilchsäuremasse, die einen Anteil der ersten Polymilchsäure von 10 Gew.-% bis 20 Gew.-% und einen Anteil der zweiten Polymilchsäure von 80 Gew.-% bis 90 Gew.-% aufweist.

In einer weiteren Ausführungsform der Erfindung sind in dem Lösemittel 12 Gew.-% bis 18 Gew.-% einer Polymilchsäuremasse gelöst. Dieses übersteigt die Löslichkeit von kristallinem PLLA bei Normalbedingungen deutlich und wird durch den Zusatz an PDLLA erreicht.

In einem weiteren Aspekt betrifft die Erfindung eine Verwendung einer erfindungsgemäßen Lösung zur Beschichtung von partikulären Düngemitteln.

In einem weiteren Aspekt betrifft die Erfindung ein Verfahren zur Beschichtung eines partikulären Düngemittels, wobei ein unbeschichtetes partikuläres Düngemittel mit einer erfindungsgemäßen Lösung in einem Beschichter beschichtet wird. Bevorzugt wird das Verfahren in einem Wirbelschicht-Beschichter oder einem Trommel-Beschichter durchgeführt. Ein entsprechendes Verfahren ist dem Fachmann beispielsweise und insbesondere aus der DE 10 2017 217 498 A1.

## Patentansprüche

1. Partikuläres Düngemittel, wobei das partikuläre Düngemittel eine Beschichtung aufweist, wobei die Beschichtung Polymilchsäuremasse enthält, die einen Anteil von 70 % bis 99 % L-Milchsäure-Monomereinheiten und einen Anteil von 1 % bis 30 % D-Milchsäure-Monomereinheiten aufweist,
**dadurch gekennzeichnet, dass**
die Polymilchsäuremasse wenigstens eine erste Polymilchsäure und wenigstens eine zweite Polymilchsäure aufweist,
wobei die erste Polymilchsäure einen Anteil von 50 % bis 67 % L-Milchsäure-Monomereinheiten und einen Anteil von 33 % bis 50 % D-Milchsäure-Monomereinheiten aufweist und
wobei die zweite Polymilchsäure einen Anteil von 95 % bis 100 % L-Milchsäure-Monomereinheiten und einen Anteil von 0 % bis 5 % D-Milchsäure-Monomereinheiten aufweist.

2. Partikuläres Düngemittel nach Anspruch 1, **dadurch gekennzeichnet, dass** die Polymilchsäuremasse einen Anteil von 95 % bis 98 % L-Milchsäure-Monomereinheiten und einen Anteil von 2% bis 5 % D-Milchsäure-Monomereinheiten aufweist.

3. Partikuläres Düngemittel nach Anspruch 1 oder 2, **dadurch gekennzeichnet, dass** die Polymilchsäuremasse einen Anteil der ersten Polymilchsäure von 5 Gew.-% bis 50 Gew.-% und einen Anteil der zweiten Polymilchsäure von 50 Gew.-% bis 95 Gew.-% aufweist.

4. Partikuläres Düngemittel nach Anspruch 3, **dadurch gekennzeichnet, dass** die Polymilchsäuremasse einen Anteil der ersten Polymilchsäure von 7,5 Gew.-% bis 25 Gew.-% und einen Anteil der zweiten Polymilchsäure von 75 Gew.-% bis 92,5 Gew.-% aufweist.

5. Partikuläres Düngemittel nach Anspruch 4, **dadurch gekennzeichnet, dass** die Polymilchsäuremasse einen Anteil der ersten Polymilchsäure von 10 Gew.-% bis 20 Gew.-% und einen Anteil der zweiten Polymilchsäure von 80 Gew.-% bis 90 Gew.-% aufweist.

6. Partikuläres Düngemittel nach einem der vorstehenden Ansprüche, **dadurch gekennzeichnet, dass** das partikuläre Düngemittel einen Kern aufweist, wobei der Kern zu wenigstens 80 Gew.-% aus Harnstoff besteht.

7. Verwendung von Polymilchsäuremasse zur Beschichtung von Düngemitteln, wobei die Polymilchsäuremasse einen Anteil von 70 % bis 99 % L-Milchsäure-Monomereinheiten und einen Anteil von 1% bis 30 % D-Milchsäure-Monomereinheiten aufweist,
**dadurch gekennzeichnet, dass** die Polymilchsäuremasse wenigstens eine erste Polymilchsäure und wenigstens eine zweite Polymilchsäure aufweist,
wobei die erste Polymilchsäure einen Anteil von 50 % bis 67 % L-Milchsäure-Monomereinheiten und einen Anteil von 33 % bis 50 % D-Milchsäure-Monomereinheiten aufweist und
wobei die zweite Polymilchsäure einen Anteil von 95 % bis 100 % L-Milchsäure-Monomereinheiten und einen Anteil von 0 % bis 5 % D-Milchsäure-Monomereinheiten aufweist.

8. Verwendung der Polymilchsäuremasse nach Anspruch 7, **dadurch gekennzeichnet, dass** die Polymilchsäuremasse einen Anteil der ersten Polymilchsäure von 5 Gew.-% bis 50 Gew.-%, bevorzugt von 7,5 Gew.-% bis 25 Gew.-%, besonders bevorzugt von 10 Gew.-% bis 20 Gew.-%, und einen Anteil der zweiten Polymilchsäure von 50 Gew.-% bis 95 Gew.-%, bevorzugt von 75 Gew.-% bis 92,5 Gew.-%, besonders bevorzugt von 80 Gew.-% bis 90 Gew.-%, aufweist.

9. Verwendung der Polymilchsäuremasse nach Anspruch 8, **dadurch gekennzeichnet, dass** die Polymilchsäuremasse einen Anteil der ersten Polymilchsäure von 5 Gew.-% bis 50 Gew.-% und einen Anteil der zweiten Polymilchsäure von 50 Gew.-% bis 95 Gew.-% aufweist,
bevorzugt einen Anteil der ersten Polymilchsäure von 7,5 Gew.-% bis 25 Gew.-% und einen Anteil der zweiten Polymilchsäure von 75 Gew.-% bis 92,5 Gew.-%,
besonders bevorzugt einen Anteil der ersten Polymilchsäure von 10 Gew.-% bis 20 Gew.-% und einen Anteil der zweiten Polymilchsäure von 80 Gew.-% bis 90 Gew.-%, aufweist.

10. Lösung zur Beschichtung von partikulären Düngemitteln, wobei die Lösung als Lösemittel Aceton oder ein Lösemittelgemisch mit wenigstens 90 Gew.-% Aceton aufweist, wobei in dem Lösemittel 1 Gew.-% bis 25 Gew.-% einer Polymilchsäuremasse gelöst sind, wobei die Polymilchsäuremasse einen Anteil von 70 % bis 99 % L-Milchsäure-Monomereinheiten und einen Anteil von 1 % bis 30 % D-Milchsäure-Monomereinheiten aufweist,
**dadurch gekennzeichnet, dass**
die Polymilchsäuremasse wenigstens eine erste Polymilchsäure und wenigstens eine zweite Polymilchsäure aufweist,
wobei die erste Polymilchsäure einen Anteil von 50 % bis 67 % L-Milchsäure-Monomereinheiten und einen Anteil von 33 % bis 50 % D-Milchsäure-Monomereinheiten aufweist und wobei die zweite Polymilchsäure einen Anteil von 95 % bis 100 % L-Milchsäure-Monomereinheiten und einen Anteil von 0 % bis 5 % D-Milchsäure-Monomereinheiten aufweist.

11. Lösung nach Anspruch 10, **dadurch gekennzeichnet, dass** die Polymilchsäuremasse einen Anteil der ersten Polymilchsäure von 5 Gew.-% bis 50 Gew.-%, bevorzugt von 7,5 Gew.-% bis 25 Gew.-%, besonders bevorzugt von 10 Gew.-% bis 20 Gew.-%, und einen Anteil der zweiten Polymilchsäure von 50 Gew.-% bis 95 Gew.-%, bevorzugt von 75 Gew.-% bis 92,5 Gew.-%, besonders bevorzugt von 80 Gew.-% bis 90 Gew.-%, aufweist.

12. Lösung nach Anspruch 11, **dadurch gekennzeichnet, dass** die Polymilchsäuremasse einen Anteil der ersten Polymilchsäure von 5 Gew.-% bis 50 Gew.-% und einen Anteil der zweiten Polymilchsäure von 50 Gew.-% bis 95 Gew.-% aufweist,
bevorzugt einen Anteil der ersten Polymilchsäure von 7,5 Gew.-% bis 25 Gew.-% und einen Anteil der zweiten Polymilchsäure von 75 Gew.-% bis 92,5 Gew.-%,
besonders bevorzugt einen Anteil der ersten Polymilchsäure von 10 Gew.-% bis 20 Gew.-% und einen Anteil der zweiten Polymilchsäure von 80 Gew.-% bis 90 Gew.-%.

13. Lösung nach einem der Ansprüche 10 bis 12, **dadurch gekennzeichnet, dass** in dem Lösemittel 12 Gew.-% bis 18 Gew.-% einer Polymilchsäuremasse gelöst sind.

14. Verwendung einer Lösung nach einem der Ansprüche 10 bis 13 zur Beschichtung von partikulären Düngemitteln.

15. Verfahren zur Beschichtung eines partikulären Düngemittels, wobei ein unbeschichtetes partikuläres Düngemittel mit einer Lösung nach einer der Ansprüche 10 bis 13 in einem Beschichter beschichtet wird.

16. Verfahren nach Anspruch 15, **dadurch gekennzeichnet, dass** das Verfahren in einem Wirbelschicht-Beschichter oder einem Trommel-Beschichter durchgeführt wird.

## Claims

1. A particulate fertilizer, where the particulate fertilizer has a coating, where the coating contains polylactic acid compound having a proportion of 70% to 99% of L-lactic acid monomer units and a proportion of 1% to 30% of D-lactic acid monomer units,
**characterized in that**
the polylactic acid compound comprises at least one first polylactic acid and at least one second polylactic acid,
where the first polylactic acid has a proportion of 50% to 67% of L-lactic acid monomer units and a proportion of 33% to 50% of D-lactic acid monomer units and
where the second polylactic acid has a proportion of 95% to 100% of L-lactic acid monomer units and a proportion of 0% to 5% of D-lactic acid monomer units.

2. The particulate fertilizer as claimed in claim 1, **characterized in that** the polylactic acid compound has a proportion of 95% to 98% of L-lactic acid monomer units and a proportion of 2% to 5% of D-lactic acid monomer units.

3. The particulate fertilizer as claimed in claim 1 or 2, **characterized in that** the polylactic acid compound has a proportion of the first polylactic acid of 5% by weight to 50% by weight and a proportion of the second polylactic acid of 50% by weight to 95% by weight.

4. The particulate fertilizer as claimed in claim 3, **characterized in that** the polylactic acid compound has a proportion of the first polylactic acid of 7.5% by weight to 25% by weight and a proportion of the second polylactic acid of 75% by weight to 92.5% by weight.

5. The particulate fertilizer as claimed in claim 4, **characterized in that** the polylactic acid compound has a proportion of the first polylactic acid of 10% by weight to 20% by weight and a proportion of the second polylactic acid of 80% by weight to 90% by weight.

6. The particulate fertilizer as claimed in any of the preceding claims, **characterized in that** the particulate fertilizer has a core, where the core consists to an extent of at least 80% by weight of urea.

7. The use of polylactic acid compound for coating fertilizers, where the polylactic acid compound has a proportion of 70% to 99% of L-lactic acid monomer units and a proportion of 1% to 30% of D-lactic acid monomer units,
**characterized in that** the polylactic acid compound comprises at least one first polylactic acid and at least one second polylactic acid,
where the first polylactic acid has a proportion of 50% to 67% of L-lactic acid monomer units and a proportion of 33% to 50% of D-lactic acid monomer units and
where the second polylactic acid has a proportion of 95% to 100% of L-lactic acid monomer units and a proportion of 0% to 5% of D-lactic acid monomer units.

8. The use of the polylactic acid compound as claimed in claim 7, **characterized in that** the polylactic acid compound has a proportion of the first polylactic acid of 5% by weight to 50% by weight, preferably of 7.5% by weight to 25% by weight, particularly preferably of 10% by weight to 20% by weight, and a proportion of the second polylactic acid of 50% by weight to 95% by weight, preferably of 75% by weight to 92.5% by weight, particularly preferably of 80% by weight to 90% by weight.

9. The use of the polylactic acid compound as claimed in claim 8, **characterized in that** the polylactic acid compound has a proportion of the first polylactic acid of 5% by weight to 50% by weight and a proportion of the second polylactic acid of 50% by weight to 95% by weight,
preferably a proportion of the first polylactic acid of 7.5% by weight to 25% by weight and a proportion of the second polylactic acid of 75% by weight to 92.5% by weight,
particularly preferably has a proportion of the first polylactic acid of 10% by weight to 20% by weight and a proportion of the second polylactic acid of 80% by weight to 90% by weight.

10. A solution for coating particulate fertilizers, where the solution comprises, as solvent, acetone or a solvent mixture having at least 90% by weight of acetone, where 1% by weight to 25% by weight of a polylactic acid compound is dissolved in the solvent, where the polylactic acid compound has a proportion of 70% to 99% of L-lactic acid monomer units and a proportion of 1% to 30% of D-lactic acid monomer units,
**characterized in that**
the polylactic acid compound comprises at least one first polylactic acid and at least one second polylactic acid,
where the first polylactic acid has a proportion of 50% to 67% of L-lactic acid monomer units and a proportion of 33% to 50% of D-lactic acid monomer units and where the second polylactic acid has a proportion of 95% to 100% of L-lactic acid monomer units and a proportion of 0% to 5% of D-lactic acid monomer units.

11. The solution as claimed in claim 10, **characterized in that** the polylactic acid compound has a proportion of the first polylactic acid of 5% by weight to 50% by weight, preferably of 7.5% by weight to 25% by weight, particularly preferably of 10% by weight to 20% by weight, and a proportion of the second polylactic acid of 50% by weight to 95% by weight, preferably of 75% by weight to 92.5% by weight, particularly preferably of 80% by weight to 90% by weight.

12. The solution as claimed in claim 11, **characterized in that** the polylactic acid compound has a proportion of the first polylactic acid of 5% by weight to 50% by weight and a proportion of the second polylactic acid of 50% by weight to 95% by weight,
preferably a proportion of the first polylactic acid of 7.5% by weight to 25% by weight and a proportion of the second polylactic acid of 75% by weight to 92.5% by weight,
particularly preferably a proportion of the first polylactic acid of 10% by weight to 20% by weight and a proportion of the second polylactic acid of 80% by weight to 90% by weight.

13. The solution as claimed in any of claims 10 to 12, **characterized in that** 12% by weight to 18% by weight of a polylactic acid compound is dissolved in the solvent.

14. The use of a solution as claimed in any of claims 10 to 13 for coating particulate fertilizers.

15. A method for coating a particulate fertilizer, where an uncoated particulate fertilizer is coated with a solution as claimed in any of claims 10 to 13 in a coater.

16. The method as claimed in claim 15, **characterized in that** the method is carried out in a fluidized bed coater or a drum coater.

## Revendications

1. Engrais particulaire, l'engrais particulaire ayant un enrobage, l'enrobage contenant un composé d'acide polylactique ayant une proportion de 70 % à 99 % d'unités monomères d'acide L-lactique et une proportion de 1 % à 30 % d'unités monomères d'acide D-lactique,
**caractérisé en ce que**
le composé d'acide polylactique comprend au moins un premier acide polylactique et au moins un second acide polylactique,
où le premier acide polylactique a une proportion de 50 % à 67 % d'unités monomères d'acide L-lactique et une proportion de 33 % à 50 % d'unités monomères d'acide D-lactique et
où le second acide polylactique a une proportion de 95 % à 100 % d'unités monomères d'acide L-lactique et une proportion de 0 % à 5 % d'unités monomères d'acide D-lactique.

2. L'engrais particulaire selon la revendication 1, **caractérisé en ce que** le composé d'acide polylactique a une proportion de 95 % à 98 % d'unités monomères d'acide L-lactique et une proportion de 2 % à 5 % d'unités monomères d'acide D-lactique.

3. L'engrais particulaire selon la revendication 1 ou 2, **caractérisé en ce que** le composé d'acide polylactique a une proportion du premier acide polylactique de 5 % en poids à 50 % en poids et une proportion du second acide polylactique de 50 % en poids à 95 % en poids.

4. L'engrais particulaire selon la revendication 3, **caractérisé en ce que** le composé d'acide polylactique a une proportion du premier acide polylactique de 7,5 % en poids à 25 % en poids et une proportion du second acide polylactique de 75 % en poids à 92,5 % en poids.

5. L'engrais particulaire selon la revendication 4, **caractérisé en ce que** le composé d'acide polylactique a une proportion du premier acide polylactique de 10 % en poids à 20 % en poids et une proportion du second acide polylactique de 80 % en poids à 90 % en poids.

6. L'engrais particulaire selon l'une quelconque des revendications précédentes, **caractérisé en ce que** l'engrais particulaire a un noyau, le noyau étant constitué d'au moins 80 % en poids d'urée.

7. Utilisation d'un composé d'acide polylactique pour enrober des engrais, où le composé d'acide polylactique a une proportion de 70 % à 99 % d'unités monomères d'acide L-lactique et une proportion de 1 % à 30 % d'unités monomères d'acide D-lactique,
**caractérisé en ce que** le composé d'acide polylactique comprend au moins un premier acide polylactique et au moins un second acide polylactique,
où le premier acide polylactique a une proportion de 50 % à 67 % d'unités monomères d'acide L-lactique et une proportion de 33 % à 50 % d'unités monomères d'acide D-lactique et
où le second acide polylactique a une proportion de 95 % à 100 % d'unités monomères d'acide L-lactique et une proportion de 0 % à 5 % d'unités monomères d'acide D-lactique.

8. Utilisation du composé d'acide polylactique selon la revendication 7, **caractérisée en ce que** le composé d'acide polylactique a une proportion du premier acide polylactique de 5 % en poids à 50 % en poids, de préférence de 7, 5 % en poids à 25 % en poids, de préférence de 7,5 % en poids à 20 % en poids, et une proportion du second acide polylactique de 50 % en poids à 95 % en poids, de préférence de 75 % en poids à 92,5 % en poids, de préférence de 80 % en poids à 90 % en poids.

9. Utilisation du composé d'acide polylactique selon la revendication 8, **caractérisée en ce que** le composé d'acide polylactique a une proportion du premier acide polylactique de 5 % en poids à 50 % en poids et une proportion du second acide polylactique de 50 % en poids à 95 % en poids,
de préférence une proportion du premier acide polylactique de 7,5 % en poids à 25 % en poids et une proportion du second acide polylactique de 75 % en poids à 92,5 % en poids,
a de préférence une proportion du premier acide polylactique de 10 % en poids à 20 % en poids et une proportion du second acide polylactique de 80 % en poids à 90 % en poids.

10. Solution pour enrober des engrais particulaires, dans laquelle la solution comprend, comme solvant, de l'acétone ou un mélange de solvants contenant au moins 90 % en poids d'acétone, dans laquelle 1 % en poids à 25 % en poids d'un composé d'acide polylactique est dissous dans le solvant, où le composé d'acide polylactique a une proportion de 70 % à 99 % d'unités monomères d'acide L-lactique et une proportion de 1 % à 30 % d'unités monomères d'acide D-lactique,
**caractérisé en ce que**
le composé d'acide polylactique comprend au moins un premier acide polylactique et au moins un second acide polylactique,
où le premier acide polylactique a une proportion de 50 % à 67 % d'unités monomères d'acide L-lactique et une proportion de 33 % à 50 % d'unités monomères d'acide D-lactique et où le second acide polylactique a une proportion de 95 % à 100 % d'unités monomères d'acide L-lactique et une proportion de 0 % à 5 % d'unités monomères d'acide D-lactique. unités monomères.

11. La solution selon la revendication 10, **caractérisée en ce que** le composé d'acide polylactique a une proportion du premier acide polylactique de 5 % en poids à 50 % en poids, de préférence de 7, 5 % en poids à 25 % en poids, de préférence de 10 % en poids à 20 % en poids, et une proportion du second acide polylactique de 50 % en poids à 95 % en poids, de préférence de 75 % en poids à 92,5 % en poids, de préférence de 80 % en poids à 90 % en poids.

12. La solution selon la revendication 11, **caractérisée en ce que** le composé d'acide polylactique a une proportion du premier acide polylactique de 5 % en poids à 50 % en poids et une proportion du second acide polylactique de 50 % en poids à 95 % en poids,
de préférence une proportion du premier acide polylactique de 7,5 % en poids à 25 % en poids et une proportion du second acide polylactique de 75 % en poids à 92,5 % en poids,
de préférence, une proportion du premier acide polylactique de 10 % en poids à 20 % en poids et une proportion du second acide polylactique de 80 % en poids à 90 % en poids.

13. La solution telle que revendiquée dans l'une quelconque des revendications 10 à 12, **caractérisée en ce que** 12 % en poids à 18 % en poids d'un composé d'acide polylactique est dissous dans le solvant.

14. L'utilisation d'une solution telle que revendiquée dans l'une quelconque des revendications 10 à 13 pour enrober des engrais particulaires.

15. Procédé d'enrobage d'un engrais particulaire, dans lequel un engrais particulaire non enrobé est enrobé d'une solution telle que revendiquée dans l'une quelconque des revendications 10 à 13 dans une enrobeuse.

16. Le procédé tel que revendiqué dans la revendication 15, **caractérisé en ce que** le procédé est mis en oeuvre dans une enrobeuse à lit fluidisé ou une enrobeuse à tambour.
